# EUROPÄISCHE PATENTSCHRIFT

(11) **EP 3 551 492 B1**
(45) Veröffentlichungstag und Bekanntmachung des Hinweises auf die Patenterteilung: **05.01.2022**
(21) Anmeldenummer: 17817654.1
(22) Anmeldetag: 27.11.2017
(51) Int. Cl.: B60L 50/40, B60L 53/80, B60L 58/20

(54) **FAHRZEUG UND VERFAHREN ZUM BETREIBEN DES FAHRZEUGES**
VEHICLE AND METHOD OF OPERATING THE VEHICLE
VÉHICULE ET MÉTHODE D'OPÉRATION DU VÉHICULE

(30) Priorität: 09.12.2016 DE 102016014627
(43) Veröffentlichungstag der Anmeldung: 16.10.2019
(73) Patentinhaber: SEW-EURODRIVE GmbH & Co. KG, 76646 Bruchsal (DE)
(72) Erfinder: BLICKLE, Christopher, Greenville, South Carolina 29605 (US)
(86) Internationale Anmeldenummer: PCT/EP2017/025347
(87) Internationale Veröffentlichungsnummer: WO 2018/103892

(56) Entgegenhaltungen:
- WO-A2-02/067346
- DE-A1- 10 328 582
- DE-A1-102005 042 940
- DE-A1-102010 021 705
- DE-A1-102012 210 967
- DE-A1-102014 006 960
- US-A1- 2002 168 556

## Beschreibung

Die Erfindung betrifft ein Fahrzeug, insbesondere Logistikfahrzeug, wobei das Fahrzeug gemäß Ansrpuch 1 ausgestaltet ist, sowie ein Verfahren zum Betreiben dieses Fahrzeuges nach Anspruch 10.

Es ist allgemein bekannt, dass ein Fahrzeug zum Transport von Last verwendbar ist, wobei ein Energiespeicher zur Versorgung elektrischer Verbraucher, insbesondere eines elektromotorischen Traktionsantriebs des Fahrzeugs auf dem Fahrzeug vorsehbar ist.

Aus der WO 02/067346 A2 ist als nächstliegender Stand der Technik ein Fahrzeug mit einem Enegiespeicher und einem DC/DC-Wandler bekannt.

Aus der US 2002/168556 A1 ist ein thermisches Management bei einer Brennstoffzelle bekannt.

Aus der DE 10 2012 210 967 A1 ist ein anpassbares Energiesystem bekannt.

Aus der DE 10 2014 006960 A1 ist ein selbstfahrendes Energieversorgungsgerät bekannt.

Aus der DE 103 28 582 A1 ist ein Elektrofahrzeug mit Brennstoffzellenantrieb bekannt.

Aus der DE 10 2005 042 940 A1 ist ein Flurförderfahrzeug mit einer Brennstoffzelleneinheit und einer Batterie bekannt.

Aus der DE 10 2010 021 705 A1 ist ein Verfahren zum Transportieren eines Objektes bekannt.

Der Erfindung liegt daher die Aufgabe zugrunde, ein Fahrzeug weiterzubilden, wobei eine Anpassung des Fahrzeugs an verschiedene Anwendungen in einfacher Weise ermöglicht ist. Erfindungsgemäß wird die Aufgabe bei dem Fahrzeug nach den in Anspruch 1 angegebenen Merkmalen gelöst.

Wichtige Merkmale der Erfindung bei dem Fahrzeug, insbesondere Logistikfahrzeug, sind, dass es ein Gestell und ein daran befestigtes Gehäuseteil aufweist,
**wobei** ein Einschubteil auf dem Gehäuseteil in einen Raumbereich des Fahrzeugs einschiebbar ist,
wobei auf dem Einschubteil ein erstes oder zweites Energiespeichermodul angeordnet ist und ein mit dem Energiespeichermodul elektrisch verbundener DC/DC-Wandler,
insbesondere
   - wobei das erste Energiespeichermodul insbesondere in seiner Wirkweise unterschiedlich ist zu dem zweiten Energiespeichermodul
   - und/oder wobei das erste Energiespeichermodul eine Batterie oder ein Akkumulator ist und das zweite Energiespeichermodul ein Doppelschichtkondensator und/oder ein Ultracap-Kondensator ist.

Von Vorteil ist dabei, dass mittels des Einschubteils ein schnelles Austauschen des Energiespeichermoduls gegen ein anderes ausführbar ist. Somit ist ein ungeladenes oder defektes Energiespeichermodul austauschbar durch bloßes Herausziehen eines Einschubteils und Einschieben eines voll geladenen und/oder betriebsbereiten.

Außerdem ist die Art des Energiespeichermoduls an die Gegebenheiten der Anlage und der zu erledigenden Abläufe anpassbar. Mit einem ersten Energiespeichermodul ist eine Batterie oder ein Akkumulator vorsehbar, so dass ein langsames Laden und Entladen und/oder geringe Spitzenstromwerte beim Laden oder Entladen zulässig sind. Wird nun das erste Energiespeichermodul gegen das zweite ausgetauscht, ist ein Ultracap einbringbar, der zwar geringere Mengen an Energie speichert, jedoch höhere Spitzenstromwerte beim Laden oder Entladen ermöglicht. Auf diese Weise ist ein sehr schnelles Laden ermöglicht.

Das Fahrzeug ist auch mit entferntem Einschubteil betreibbar. Hierzu ist eine induktive Versorgung über eine Sekundärwicklung an der Unterseite des Fahrzeugs ermöglicht, wobei aus der Sekundärwicklung alle Verbraucher des Fahrzeugs versorgbar sind, solange siegenügend stark an einen bodenverlegten Primärleiter induktiv gekoppelt vorgesehen ist.

Gemäß der Erfindung ist zur Führung und/oder Zentrierung des Einschubteils das Gehäuseteil wannenförmig ausgeführt, insbesondere wobei die Vertiefung der Wanne sich in Einschubrichtung erstreckt. Von Vorteil ist dabei, dass eine präzise Führung beim Einschieben vorhanden ist und somit ein Steckverbinderteil mit einem Gegensteckverbinderteil in Kontakt bringbar ist, ohne dass ein Verkanten bewirkt wird. Insbesondere fungiert die Wannenform beim Einschieben des Einschubteils als Führung des Einschubteils.

Gemäß der Erfindung weist das Gehäuseteil durchgehende Schlitze auf, insbesondere in Einschubrichtung regelmäßig voneinander beabstandete Schlitze. Von Vorteil ist dabei, dass eine verbesserte Entwärmung erreichbar ist. Insbesondere bei der Bewegung des Fahrzeugs wird ein Luftstrom durch die Schlitze hindurch bewirkt, welcher dann durch die Ausnehmung in der Grundplatte zum Einschubteil hin durchströmt.

Gemäß der Erfindung weist das Einschubteil eine Grundplatte auf, welche eine Ausnehmung aufweist,
wobei die senkrechte Projektion der Ausnehmung in die Verfahrfläche des Fahrzeugs überlappt mit der senkrechten Projektion der Schlitze in die Verfahrfläche,
so dass durch die Schlitze durchtretende Kühlluft durch die Ausnehmung zu Kühlrippen des DC/DC-Wandler geleitet wird. Von Vorteil ist dabei, dass der Kühlluftstrom in einfacher Weise durchströmt und auch zu dem Energiespeichermodul gelangt, welches somit in einfacher Weise kühlbar ist.

Gemäß der Erfindung weist der DC/DC-Wandler auf seiner der Grundplatte zugewandten Seite Kühlrippen auf. Von Vorteil ist dabei, dass die Wärme der Kühlrippen nicht nur an die die Kühlrippen umgebende Luft abgebbar ist, sondern auch an die Grundplatte. Die Grundplatte ermöglicht sozusagen ein weiteres Aufspreizen der Wärme. Außerdem ist die Grundplatte mit dem Gestell des Fahrzeugs verbunden, welches metallisch ausgeführt ist und somit zur Ableitung von Wärme geeignet ist.

Gemäß der Erfindung ist der DC/DC-Wandler elektrisch verbunden mit einem Zwischenkreis, aus dem ein Wechselrichter versorgbar ist, welcher einen Elektromotor insbesondere zum Antreiben eines Rades des Fahrzeugs speist. Von Vorteil ist dabei, dass aus dem Zwischenkreis der Wechselrichter versorgbar ist und somit eine dreiphasige Wechselspannung für den Elektromotor mittels des Wechselrichters zur Verfügung stellbar ist. Außerdem sind aus dem Zwischenkreis auch weitere Verbraucher versorgbar, insbesondere die Steuerung, so dass der Energiespeicher des Fahrzeugs geschont wird. In den Zwischenkreis ist auch Leistung zuführbar, welche induktiv an die Sekundärwicklung des Fahrzeugs übertragen wurde und über den AC/DC-Wandler dem Zwischenkreis zugeführt wird. Der Sekundärwicklung ist eine Kapazität in Reihe und/oder parallel zugeschaltet, der derart dimensioniert ist, dass die Resonanzfrequenz des so gebildeten Schwingkreises der Frequenz des in den Primärleiter eingeprägten Wechselstromes im Wesentlichen gleicht. Durch diese resonante Übertragung ist auch bei schwankender induktiver Kopplung ein hoher Wirkungsgrad der induktiven berührungslosen Übertragung der elektrischen Leistung erreichbar.

Gemäß der Erfindung ist an der Grundplatte ein Steckverbinderteil angeordnet, welches beim Einschieben des Einschubteils in Steckkontakt mit einem entsprechenden, mit dem Gestell des Fahrzeugs verbundenen Gegensteckverbinderteil gebracht wird. Von Vorteil ist dabei, dass ein automatisches Steckverbinden beim Einschieben erreichbar ist.

Bei einer vorteilhaften Ausgestaltung ist das Steckverbinderteil ein Hybridsteckverbinderteil, wobei erste Kontakte mit einem Gleichspannungsanschluss des DC/DC-Wandlers verbunden ist und zweite Kontakte Signale eines Datenbusses führen, welcher zwischen einer Steuerung des Fahrzeugs und dem DC/DC-Wandler vorgesehen ist. Von Vorteil ist dabei, dass Leistungsübertragung und Datenübertragung beim Einschieben gleichzeitig zur Verfügung steht.

Gemäß dem erfindungsgemäßen Verfahren wird nach dem Einschieben des Einschubteils und elektrischen Verbinden des DC/DC-Wandlers mit dem Zwischenkreis des Fahrzeugs der DC/DC-Wandler automatisch erkannt und wird als Busteilnehmer eines Datenbusses des Fahrzeugs betrieben, insbesondere zum Steuern des Energieflusses gemäß Vorgabe durch ein Energiemanagementsystem. Von Vorteil ist dabei, dass das Fahrzeug auch ohne das Einschubteil betreibbar ist. Wenn jedoch ein Einschubteil eingeschoben wird, wird dies automatisch erkannt und somit der DC/DC-Wandler als Busteilnehmer betriebsbereit gemacht, insbesondere mit einer Adresse als Busteilnehmer aktiviert.

Bei einer vorteilhaften Ausgestaltung ist an der Unterseite des Fahrzeugs eine Sekundärwicklung angeordnet, insbesondere an welche Energie von einem in der Verfahrfläche verlegten Primärleiter übertragbar ist,
wobei aus der Sekundärwicklung Energie dem Zwischenkreis zuführbar ist, insbesondere über einen AC/DC-Wandler. Von Vorteil ist dabei, dass induktive also berührungslose Versorgung ausführbar ist. Somit ist das Fahrzeug entlang eines langgestreckt bodenverlegten Primärleiters führbar und gleichzeitig beladbar mit elektrischer Energie. Bei Vorhandensein eines Einschubteils mit Energiespeichermodul ist auch ein vorübergehendes Abweichen von der durch den Primärleiter vorgegebenen Spur möglich.

Bei einer vorteilhaften Ausgestaltung ist am Gestell des Fahrzeugs ein Energiespeicher, insbesondere Akkumulator oder Batterie, angeordnet, aus welchem zumindest die Steuerung des Fahrzeugs versorgbar ist. Von Vorteil ist dabei, dass bei Ausfall der induktiven Versorgung und nach Entleeren des Energiespeichermoduls eine Notversorgung des Fahrzeugs ermöglicht ist. Somit ist zumindest noch das Senden einer Warninformation, das Betreiben der Sicherheitseinrichtungen, wie Sensoren oder dergleichen, und/oder das Bewegen des Fahrzeugs in einen sicheren Bereich, wie Parkplatz oder dergleichen, ermöglicht.

Bei einer vorteilhaften Ausgestaltung sind an der Grundplatte zwei Seitenwände des Einschubteils befestigt,
an welchen das zweite Energiespeichermodul angeschraubt ist mit einer durch das Gehäuse des zweiten Energiespeichermoduls durchgehenden Schraube, insbesondere so dass zwischen zweitem Energiespeichermodul und Grundplatte ein Abstand vorhanden ist.

Bei einer vorteilhaften Ausgestaltung ist zwischen den Seitenwänden eine Halteschiene befestigt, an welcher das erste Energiespeichermodul angehängt gehalten ist, insbesondere so dass zwischen erstem Energiespeichermodul und Grundplatte ein Abstand vorhanden ist. Von Vorteil ist dabei, dass das Energiespeichermodul vom wärmeerzeugenden DC/DC-Wandler thermisch abgetrennt ist und in einem Kühlluftstrom zwischen Energiespeichermodul und Grundplatte entwärmbar ist.

Bei einer vorteilhaften Ausgestaltung ist an der Grundplatte ein Griff ausgeformt. Von Vorteil ist dabei, dass eine einfache Betätigung beim Einschieben ermöglicht ist.

Bei einer vorteilhaften Ausgestaltung sind durchgehende Löcher zur Fixierung des Einschubteils angeordnet am Gehäuseteil mittels Schrauben. Von Vorteil ist dabei, dass ein einfaches Einschieben oder Herausziehen ermöglicht ist.

Bei einer vorteilhaften Ausgestaltung ist die das erste oder zweite Energiespeichermodul haltende Seitenwand mit der Grundplatte verbunden. Von Vorteil ist dabei, dass ein einfacher Austausch ermöglicht ist.

Bei einer vorteilhaften Ausgestaltung ist der Raumbereich zumindest auch vom Gestell, von der Grundplatte, von einem mit dem Gestell des Fahrzeugs verbundenen Gehäuseblechteil und einer Deckplatte begrenzt. Von Vorteil ist dabei, dass das Einschubteil in einem geschützten Raumbereich anordenbar ist.

Die Erfindung wird nun anhand von Abbildungen näher erläutert:

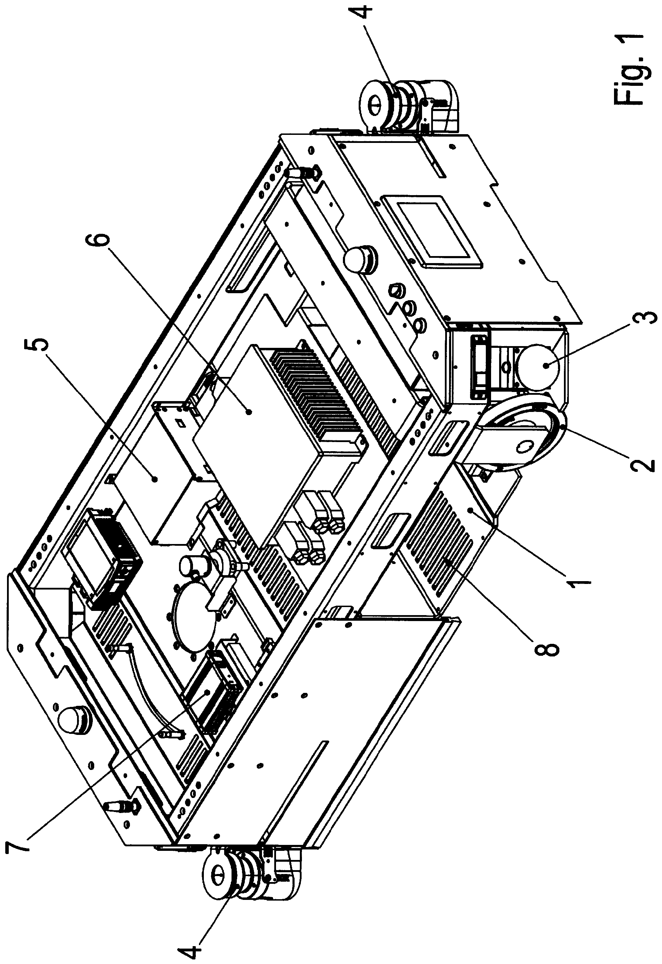

In der Figur 1 ist ein Fahrzeug, insbesondere fahrerloses Logistikfahrzeug, dargestellt, wobei im Fahrzeug ein Raumbereich frei ist.
In der Figur 2 ist ein Einschubteil beim Einschieben in den Raumbereich gezeigt, wobei vom Einschubteil ein erstes Energiespeichermodul 21 aufgenommen ist.
In der Figur 3 ist ein zum Ausführungsbeispiel nach Figur 2 alternatives Einschubteil beim Einschieben in den Raumbereich gezeigt, wobei vom Einschubteil ein zweites Energiespeichermodul 31 aufgenommen ist.

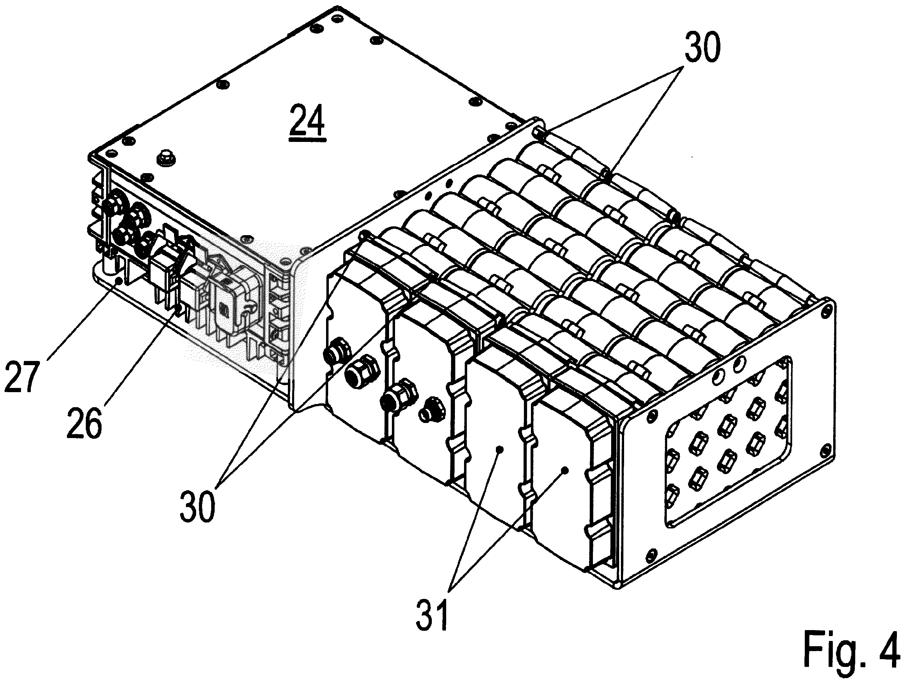

In Figur 4 ist das Einschubteil mit zweitem Energiespeichermodul 31 aus Figur 4 näher dargestellt.

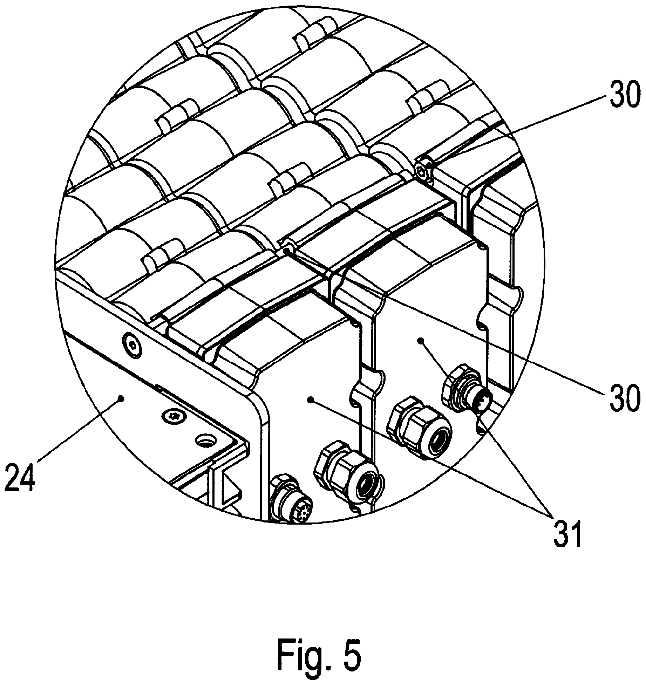

In der Figur 5 ist ein Bereich einer Schrägansicht auf das zweite Energiespeichermodul 31 näher dargestellt.

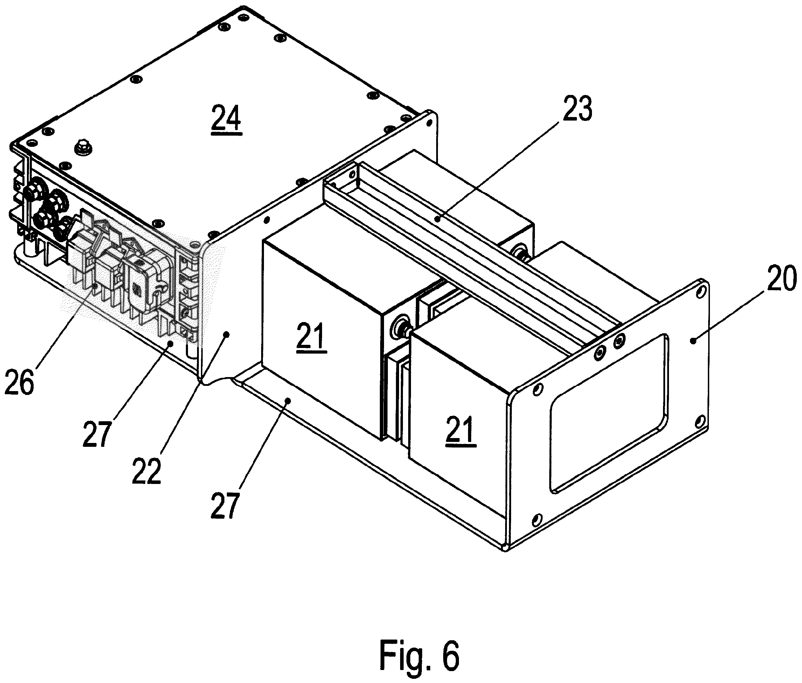

In der Figur 6 ist das Einschubteil mit erstem Energiespeichermodul 21 aus Figur 2 in einer anderen Blickrichtung näher dargestellt.

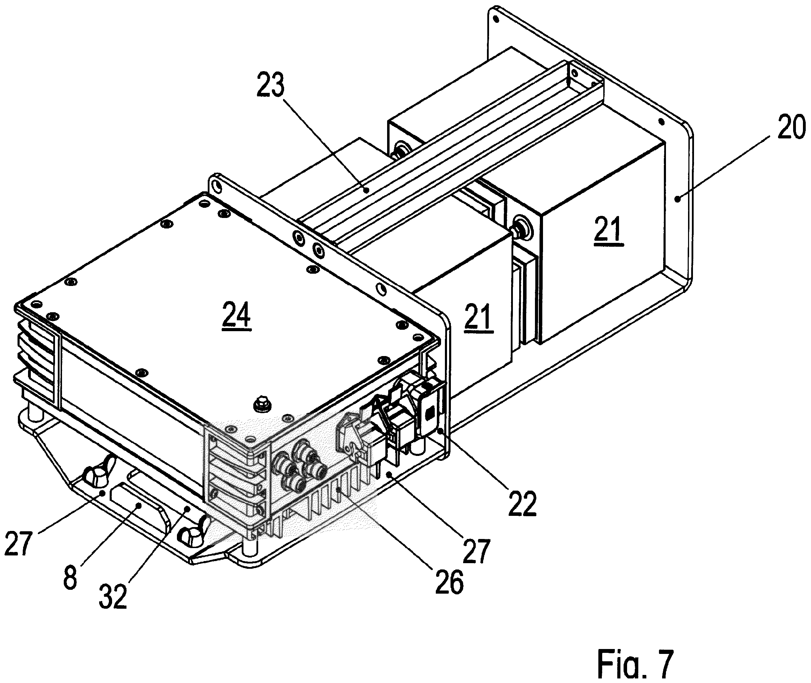

In der Figur 7 ist das Einschubteil mit erstem Energiespeichermodul 21 aus Figur 2 in einer weiteren Blickrichtung näher dargestellt.

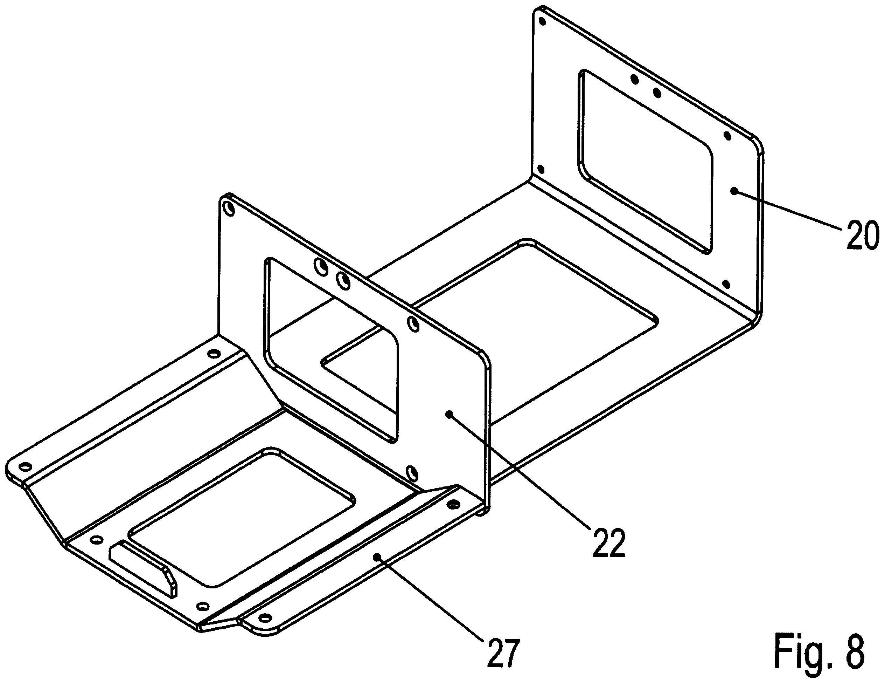

In Figur 8 ist die Grundplatte 27 mit Seitenwänden 20 und 22 in Schrägansicht näher dargestellt.

Wie in den Figuren gezeigt, weist das Fahrzeug an seinem Gestell drehbar gelagerte Räder 2 angeordnet, insbesondere zur Ableitung der wesentlichen Gewichtskraft des Fahrzeugs In die Verfahrfläche. Vorzugsweise sind die Räder 2 als Lenkrollen ausgeführt. Das Fahrzeug weist eine drehbar angeordnete Lenkeinheit auf, deren Räder lenkbar und antreibbar sind von einem Elektromotor.

Am Gestell ist einen Steuerung 7 angeordnet, welche einen Wechselrichter zur Speisung des Elektromotors ansteuert. Auf diese Weise ist die Drehzahl des Elektromotors steuerbar. Außerdem steuert die Steuerung 7 über einen weiteren Elektromotor den Lenkwinkel der Lenkeinheit. Die Steuerung 7 steuert also das Fahrzeug entlang einer Bahnkurve auf der Verfahrfläche.

Das Fahrzeug weist einen Energiespeicher 5, insbesondere Batterie, auf, der zur Versorgung der Steuerung 7 dient.

An der Unterseite des Gestells des Fahrzeugs ist eine Sekundärwicklung angeordnet, welche induktiv mit einem an der Verfahrfläche langgestreckt verlegten Primärleiter koppelbar. Dabei wird der Primärleiter mit einem Wechselstrom beaufschlagt, wobei die Frequenz des Wechselstroms zwischen 10 kHz und 1 MHz beträgt. Somit ist eine induktive Versorgung der elektrischen Verbraucher Des Fahrzeugs ermöglicht, solange das Fahrzeug derart nahe am Primärleiter positioniert ist, dass die induktive Kopplung zwischen dem an der Verfahrfläche angeordneten Primärleiter und der am Fahrzeug angeordneten Sekundärwicklung ausreichend stark ist.

Wenn jedoch das Fahrzeug abweicht von einer Bahnkurve, welche dem Primärleiter folgt, fällt die induktive Versorgung aus. In diesem Fall wird dann die Steuerung 7 vom Energiespeicher 5 versorgt. Allerdings ist die Energiemenge des Energiespeichers 5 nicht ausreichend, um die Steuerung 7 und zusätzlich den Elektromotor lange Zeit zu speisen.

Abhängig von der Logistikanlage oder Produktionsanlage, in welcher das Fahrzeug eingesetzt wird, ist ein weiterer Energiespeicher mittels eines in den Raumbereich einschiebbaren Einschubteils vorsehbar.

Hierzu ist das Einschubteil mit einem jeweiligen Energiespeichermodul (21, 31) ausgestattet.

Ein erstes Energiespeichermodul 21 besteht beispielsweise aus als Batterieen oder Akkumulatoren ausgeführten Modulen.

Ein zweites, alternativ zum erste Energiespeichermodul 21 verwendbares Energiespeichermodul 31 besteht beispielsweise aus Modulen, die jeweils aus einem Doppelschichtkondensator und/oder Ultracap ausgeführt sind.

Auf der Grundplatte 27 des Einschubteils ist jeweils ein DC/DC-Wandler 24 angeordnet, welcher die vom Energiespeichermodul 21 oder 31 zur Verfügung gestellte Spannung in eine Zwischenkreisspannung umwandelt, beispielsweise eine Spannung zwischen 400 Volt und 500 Volt, aus welcher dann der den als Fahrantrieb eingesetzten Elektromotor speisenden Wechselrichter versorgbar ist. Der Wechselrichter weist drei Halbbrücken von steuerbaren Leistungshalbleiterschaltern auf, so dass der Wechselrichter ausgangsseitig eine Drehspannung dem Elektromotor zur Verfügung stellt, deren Frequenz und Amplitude durch die Steuerung 7 vorgegeben ist.

Der DC/DC-Wandler 24 weist Kühlrippen 26 auf und ist auf der Grundplatte des Einschubteils 27 angeordnet, wobei die Kühlrippen 26 auf der dem Einschubteil 27 zugewandten Seite des DC/DC-Wandlers 24 angeordnet sind.

Am Gestell des Fahrzeugs ist ein wannenförmiges Gehäuseteil 1 angeordnet, wobei die Wannenform eine Vertiefung bewirkt. Das Einschubteil, insbesondere die Grundplatte 27 des Einschubteils, wird auf dem Gehäuseteil 1 gleitend eingeschoben, wobei die wannenförmige Vertiefung sich in Einschubrichtung erstreckt und somit als Führung beim Einschieben dient.

In Einschubrichtung vorne ist am Einschubteil, insbesondere an der Grundplatte 27 des Einschubteils, ein Hybridsteckverbinderteil angeordnet, welches in ein am Gestell des Fahrzeugs angeordnetes entsprechendes Gegensteckverbinderteil eingesteckt wird. Da die Bewegung geführt ausgeführt wird, ist auch beim Einstecken des Steckverbinderteils in das Gegensteckverbinderteil ein Verkanten vermeidbar.

Das jeweilige Energiespeichermodul 21 oder 31 ist elektrisch verbunden mit einem der beiden Gleichspannungsanschlüsse des DC/DC-Wandlers 24. Der andere Gleichspannungsanschluss ist an die Kontakte des Hybridsteckverbinderteils geführt.

Auf diese Weise ist ein schnelles Verbinden ausführbar und es ist ein Einschubteil schnell und einfach austauschbar - beispielsweise bei Wartung oder bei Austausch eines

Einschubteils mit leerem Energiespeichermodul (21, 31) gegen ein Einschubteil mit einem voll geladenen Energiespeichermodul (21, 31).

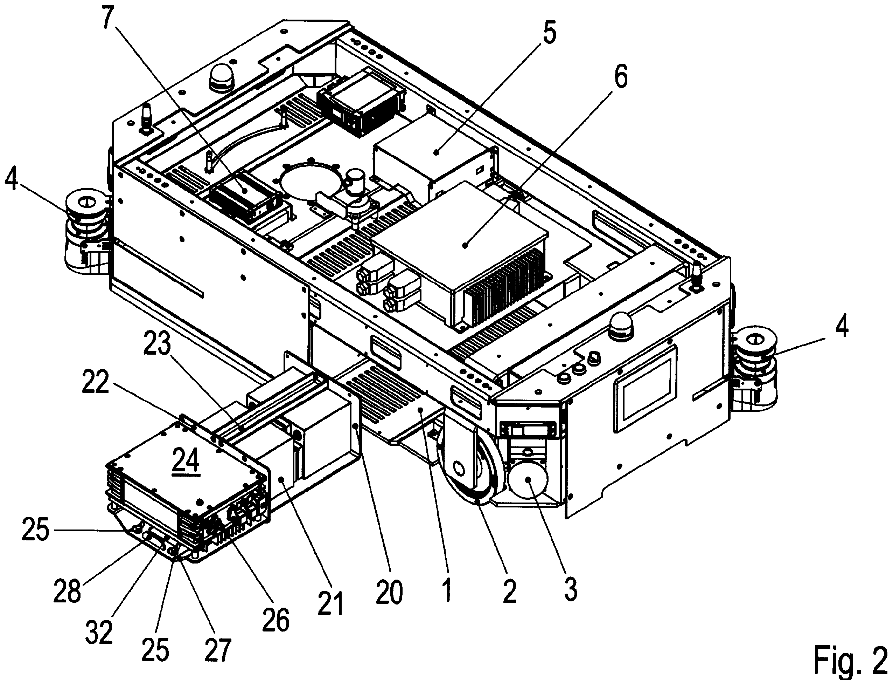

Wie in Figur 2 gezeigt, werden das erste Energiespeichermodul 21 von einer Halteschiene 23, die zwei voneinander beabstandete Seitenwände 20 und 22 miteinander verbindet, begrenzt und somit mechanisch stabil genug fixiert. Dabei ist das erste Energiespeichermodul 21 an der Halteschiene 23 hängend befestigbar, so dass ein Luftraum zwischen Grundplatte 27 und erstem Energiespeichermodul 21 vorhanden ist. Auf diese Weise ist das erste Energiespeichermodul 21 thermisch entkoppelt von der Grundplatte 27 und somit auch von dem über die Kühlrippen 26 in die Grundplatte 27 eingetragenen Wärmestrom des DC/DC-Wandlers 24.

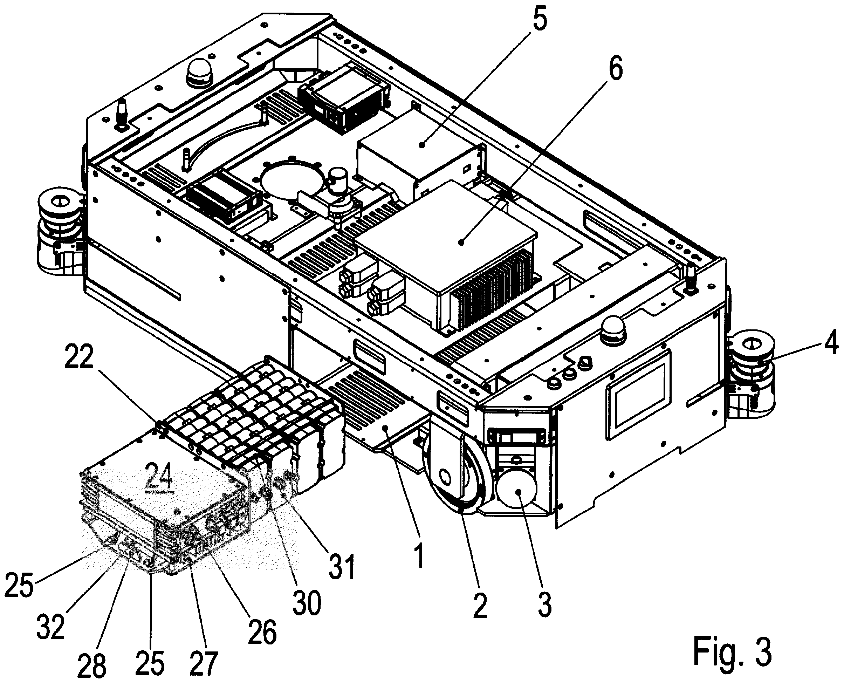

Wie in Figur 3 gezeigt, wird das zweiten Energiespeichermodul 31 mittels durch das Gehäuse des zweiten Energiespeichermoduls 31 durchgehender Schrauben 30 an einer Seitenwand 22 und/oder 20 befestigt. Somit ist eine hängende Befestigung ermöglicht und wiederum eine Beabstandung zwischen der Grundplatte 27 des Einschubteils und dem zweiten Energiespeichermodul 31 vorsehbar. Auf diese Weise ist das erste Energiespeichermodul 31 thermisch entkoppelt von der Grundplatte 27 und somit auch von dem über die Kühlrippen 26 in die Grundplatte 27 eingetragenen Wärmestrom des DC/DC-Wandlers 24.

Wie in den Figuren 2 und 3 gezeigt, ist an der der Umgebung zugewandten Endbereich der Grundplatte 27 ein Griff angeordnet, der zusammen mit einer Ausnehmung 32 der Grundplatte als Tragegriff fungieren kann. Beim separaten Tragen des Einschubteils greifen also die Finger des Tragenden durch die Ausnehmung 32.

Das Gehäuseteil 1 weist durchgehende Schlitze 8, insbesondere voneinander in Einschubrichtung regelmäßig beabstandete, sich quer zur Einschubrichtung in der Grundplatte des Einschubteils erstreckende, durchgehende Schlitze 8, auf. Somit ist ein Kühlluftstrom durch das Gehäuseteil 1 hindurch ermöglicht.

Nach dem Einschieben liegt die Grundplatte 27 auf dem Gehäuseteil 1 auf, so dass die Ausnehmung 32 über dem von den Schlitzen 8 überdeckten Bereich angeordnet ist.

Auf diese Weise tritt der durch die Schlitze 8 hindurchtretende Kühlluftstrom auch durch die Ausnehmung hindurch und gelangt somit auch direkt an die Kühlrippen 26 des DC/DC-Wandlers.

Die Grundplatte 27 weist auch durchgehende Löcher 25 auf, die nach dem Einschieben in Flucht liegen mit entsprechenden durch das Gehäuseteil 1 durchgehenden Löchern, so dass Halteschrauben zur Fixierung der Grundplatte durch die Löcher hindurchführbar sind und mittels Muttern befestigbar sind. Nach dem Einschieben wird der Raumbereich gegen die Umgebung mit einem ans Gestell anzuschraubenden Gehäuseblechteil abgedeckt und geschützt.

Erfindungsgemäß ist also durch das Einschubteil die Ladekapazität des Fahrzeugs erhöhbar. Mittels des ersten Energiespeichermoduls 21 ist eine große zusätzliche Energiemenge bereitstellbar, wobei der Spitzenstrom beim Laden und beim Entladen begrenzt ist. Durch das zweite Energiespeichermodul 31 sind sehr viel höhere Spitzenströme ermöglicht, wobei die speicherbare Energiemenge etwas geringer als beim ersten Energiespeichermodul 21 ist. Somit ist im letztgenannten Fall bei induktiver Versorgung des Fahrzeugs das zweite Energiespeichermodul 31 schnell aufladbar und somit kleine Abweichungen der Bahnkurve des Fahrzeugs vom Primärleiter abpufferbar.

Mittels des ersten Energiespeichermoduls 21 sind große Abweichungen vom Primärleiter erlaubt. Allerdings muss das erste Energiespeichermodul 21 zunächst genügend aufgeladen sein.

Die Steuerung 7 umfasst ein entsprechendes Energiemanagementsystem und verwendet den DC/DC-Wandler 24 als Steuerelement zum Steuern des Energieflusses.

Am Fahrzeug sind auch Sensoren 4 vorgesehen, welche Hindernisse rechtzeitig erkennen und somit ein Anhalten oder Umfahren ermöglichen. Außerdem ist auch ein Notaus-Schalter 3 von außen zugänglich vorhanden, so dass ein Abschalten des Fahrzeugs ermöglicht ist.

Die Grundplatte 27 ist im der Umgebung zugewandten Bereich der Wannenform entsprechend geformt.

Das Fahrzeug ist als fahrerloses Transportsystem verwendbar, insbesondere auch als automatisch gesteuertes Fahrzeug. Auf der Oberseite ist eine in den Figuren nicht gezeigte Deckplatte am Gestell des Fahrzeugs befestigt und somit eine zu transportierende Last aufnehmbar. In Weiterbildung ist die Deckplatte über einen Linearaktor höhenveränderlich angeordnet, so dass die Last in verschiedenen Höhen aufnehmbar und transportierbar ist. In Weiterbildung ist auf der Deckplatte sogar ein Werkzeug zur Bearbeitung der aufgenommenen Last, insbesondere Werkstück, ermöglicht.

### Bezugszeichenliste

- 1: wannenförmiges Gehäuseteil
- 2: Rad
- 3: Notaus-Schalter
- 4: Sensor
- 5: Energiespeicher, insbesondere Batterie
- 6: AC/DC-Wandler, insbesondere Anpasssteller
- 7: Steuerung
- 8: durchgehende Schlitze, insbesondere voneinander in Einschubrichtung regelmäßig beabstandete, sich quer zur Einschubrichtung in der Grundplatte des Einschubteils erstreckende, durchgehende Schlitze
- 20: Seitenwand des Einschubteils
- 21: erstes Energiespeichermodul
- 22: Seitenwand des Einschubteils
- 23: Halteschiene
- 24: DC/DC-Wandler
- 25: Löcher
- 26: Kühlkörper
- 27: Grundplatte des Einschubteils
- 28: Griff
- 30: Halteschrauben
- 31: zweites Energiespeichermodul, insbesondere Ultracap
- 32: Ausnehmung

## Patentansprüche

1. Fahrzeug, insbesondere Logistikfahrzeug,
aufweisend ein Gestell und ein daran befestigtes Gehäuseteil (1),
**wobei** ein Einschubteil auf dem Gehäuseteil (1) in einen Raumbereich des Fahrzeugs einschiebbar ist,
wobei auf dem Einschubteil ein erstes oder zweites Energiespeichermodul (21, 31) angeordnet ist und ein mit dem Energiespeichermodul (21, 31) elektrisch verbundener DC/DC-Wandler (24),
insbesondere wobei das erste Energiespeichermodul (21) insbesondere in seiner Wirkweise unterschiedlich ist zu dem zweiten Energiespeichermodul (31)
und/oder wobei
das erste Energiespeichermodul (21) eine Batterie oder ein Akkumulator ist und das zweite Energiespeichermodul (31) ein Doppelschichtkondensator und/oder ein Ultracap-Kondensator ist,
wobei
zur Führung und/oder Zentrierung des Einschubteils das Gehäuseteil (1) wannenförmig ausgeformt ist,
wobei beim Einschieben des Einschubteils die Wannenform als Führung des Einschubteils fungiert,
wobei das Gehäuseteil (1) durchgehende Schlitze aufweist, insbesondere in Einschubrichtung regelmäßig voneinander beabstandete Schlitze,
**dadurch gekennzeichnet, dass** der DC/DC-Wandler (24) auf seiner der Grundplatte (27) zugewandten Seite Kühlrippen aufweist,
wobei das Einschubteil eine auf dem wannenförmigen Gehäuseteil (1) gleitend einschiebbare Grundplatte (27) aufweist, welche eine Ausnehmung (32) aufweist,
wobei die senkrechte Projektion der Ausnehmung (32) in die Verfahrfläche des Fahrzeugs überlappt mit der senkrechten Projektion der Schlitze in die Verfahrfläche, so dass durch die Schlitze durchtretende Kühlluft durch die
Ausnehmung (32) zu den Kühlrippen des DC/DC-Wandlers (24) geleitet wird,
wobei an der Grundplatte (27) ein Steckverbinderteil angeordnet ist, welches beim Einschieben des Einschubteils in Steckkontakt mit einem entsprechenden, mit dem Gestell des Fahrzeugs verbundenen Gegensteckverbinderteil gebracht wird, so dass der DC/DC-Wandler (24) elektrisch verbunden ist mit einem Zwischenkreis, aus dem ein Wechselrichter versorgbar ist, welcher einen Elektromotor insbesondere zum Antreiben eines Rades des Fahrzeugs speist.

2. Fahrzeug nach Anspruch 1,
**dadurch gekennzeichnet, dass**
die Vertiefung der Wanne sich in Einschubrichtung erstreckt.

3. Fahrzeug nach mindestens einem der vorangegangenen Ansprüche,
**dadurch gekennzeichnet, dass**
das Steckverbinderteil ein Hybridsteckverbinderteil ist,
wobei erste Kontakte mit einem Gleichspannungsanschluss des DC/DC-Wandlers (24) verbunden ist und zweite Kontakte Signale eines Datenbusses führen, welcher zwischen einer Steuerung des Fahrzeugs und dem DC/DC-Wandler (24) vorgesehen ist.

4. Fahrzeug nach mindestens einem der vorangegangenen Ansprüche,
**dadurch gekennzeichnet, dass**
an der Unterseite des Fahrzeugs eine Sekundärwicklung angeordnet ist, insbesondere an welche Energie von einem in der Verfahrfläche verlegten Primärleiter übertragbar ist,
wobei aus der Sekundärwicklung Energie dem Zwischenkreis zuführbar ist, insbesondere über einen AC/DC-Wandler (6),
und/oder dass
am Gestell des Fahrzeugs ein Energiespeicher, insbesondere Akkumulator oder Batterie, angeordnet ist, aus welchem zumindest die Steuerung des Fahrzeugs versorgbar ist.

5. Fahrzeug nach mindestens einem der vorangegangenen Ansprüche,
**dadurch gekennzeichnet, dass**
an der Grundplatte (27) zwei Seitenwände des Einschubteils befestigt sind,
an welchen das zweite Energiespeichermodul (31) angeschraubt ist mit einer durch das Gehäuse des zweiten Energiespeichermoduls (31) durchgehenden Schraube, insbesondere so dass zwischen zweitem Energiespeichermodul (31) und Grundplatte (27) ein Abstand vorhanden ist,
oder zwischen welchen eine Halteschiene (23) befestigt ist, an welcher das erste Energiespeichermodul (21) angehängt gehalten ist, insbesondere so dass zwischen erstem Energiespeichermodul (21) und Grundplatte (27) ein Abstand vorhanden ist.

6. Fahrzeug nach mindestens einem der vorangegangenen Ansprüche,
**dadurch gekennzeichnet, dass**
an der Grundplatte (27) ein Griff (28) ausgeformt ist
und/oder dass
durchgehende Löcher zur Fixierung des Einschubteils angeordnet sind am Gehäuseteil (1) mittels Schrauben.

7. Fahrzeug nach mindestens einem der vorangegangenen Ansprüche,
**dadurch gekennzeichnet, dass**
die das erste oder zweite Energiespeichermodul (21, 31) haltende Seitenwand mit der Grundplatte (27) verbunden ist.

8. Fahrzeug nach mindestens einem der vorangegangenen Ansprüche,
**dadurch gekennzeichnet, dass**
der Raumbereich zumindest auch vom Gestell, von der Grundplatte (27), von einem mit dem Gestell des Fahrzeugs verbundenen Gehäuseblechteil und einer Deckplatte begrenzt ist,
insbesondere wobei der Raumbereich zur Umgebung hin vom Gehäuseblechteil abgedeckt ist,
insbesondere wobei das Gehäuseblechteil mit dem Gestell schraubverbunden ist.

9. Fahrzeug nach mindestens einem der vorangegangenen Ansprüche,
**dadurch gekennzeichnet, dass**
der Sekundärwicklung eine Kapazität in Reihe und/oder parallel zugeschaltet ist, so dass die Resonanzfrequenz des so gebildeten Schwingkreises der Frequenz des in den Primärleiter eingeprägten Wechselstromes gleicht.

10. **Verfahren zum Betreiben eines Fahrzeugs nach mindestens einem der vorangegangenen Ansprüche,**
**dadurch gekennzeichnet, dass**
nach dem Einschieben des Einschubteils und elektrischen Verbinden des DC/DC-Wandlers (24) mit dem Zwischenkreis des Fahrzeugs der **DC/DC-Wandler** (24) automatisch erkannt wird und als Busteilnehmer eines Datenbusses des Fahrzeugs betrieben wird, insbesondere zum Steuern des Energieflusses gemäß Vorgabe durch ein Energiemanagementsystem.

## Claims

1. Vehicle, in particular a logistics vehicle,
comprising a frame and a housing part (1) fastened thereto,
an insertion part on the housing part (1) being insertable into a spatial region of the vehicle,
a first or a second energy storage module (21, 31) and a DC-to-DC converter (24), which is electrically connected to the energy storage module (21, 31), being arranged on the insertion part,
the first energy storage module (21) in particular being different from the second energy storage module (31), particularly in terms of its mode of operation,
and/or
the first energy storage module (21) being a battery or an accumulator and the second energy storage module (31) being an electrochemical double-layer capacitor and/or an ultracapacitor,
the housing part (1) being moulded in a trough shape in order to guide and/or centre the insertion part,
the trough shape acting as a guide for the insertion part when the insertion part is inserted,
the housing part (1) having through-slots, in particular slots that are regularly spaced apart from one another in the insertion direction,
**characterised in that**
the DC-to-DC converter (24) has cooling ribs on its side facing the base plate (27),
the insertion part having a base plate (27), which is slidably insertable on the trough-shaped housing part (1) and has a cutout (32),
the vertical projection of the cutout (32) into the travel surface of the vehicle overlapping the vertical projection of the slots into the travel surface, such that cooling air passing through the slots is conducted through the cutout (32) to the cooling ribs of the DC-to-DC converter (24),
a plug-in connector part being arranged on the base plate (27) and being brought into plugging contact with a corresponding mating plug-in connector part, which is connected to the frame of the vehicle, when the insertion part is inserted, in such a way that the DC-to-DC converter (24) is electrically connected to a DC link from which an inverter, which feeds an electric motor in particular for driving a wheel of the vehicle, can be powered.

2. Vehicle according to claim 1,
**characterised in that**
the recess of the trough extends in the insertion direction.

3. Vehicle according to at least one of the preceding claims,
**characterised in that**
the plug-in connector part is a hybrid plug-in connector part,
first contacts being connected to a DC voltage terminal of the DC-to-DC converter (24), and second contacts carrying signals of a data bus that is provided between a controller of the vehicle and the DC-to-DC converter (24).

4. Vehicle according to at least one of the preceding claims,
**characterised in that**
a secondary winding, to which in particular energy can be transmitted from a primary conductor installed in the travel surface, is arranged on the underside of the vehicle, energy being suppliable from the secondary winding to the DC link, in particular by means of an AC-to-DC converter (6),
and/or **in that**
an energy storage device, in particular an accumulator or a battery, from which at least the controller of the vehicle can be powered, is arranged on the frame of the vehicle.

5. Vehicle according to at least one of the preceding claims,
**characterised in that**
two side walls of the insertion part are fastened to the base plate (27), to which side walls the second energy storage module (31) is screwed by a screw that passes through the housing of the second energy storage module (31), in particular such that a distance is present between the second energy storage module (31) and the base plate (27),
or between which side walls a retaining bar (23) is fastened, on which the first energy storage module (21) is retained in a suspended manner, in particular such that a distance is present between the first energy storage module (21) and the base plate (27).

6. Vehicle according to at least one of the preceding claims,
**characterised in that**
a handle (28) is moulded on the base plate (27)
and/or **in that**
through-holes are arranged for securing the insertion part on the housing part (1) by means of screws.

7. Vehicle according to at least one of the preceding claims,
**characterised in that**
the side wall retaining the first or the second energy storage module (21, 31) is connected to the base plate (27).

8. Vehicle according to at least one of the preceding claims,
**characterised in that**
the spatial region is also delimited at least by the frame, by the base plate (27), by a housing panel connected to the frame of the vehicle, and by a cover plate,
the spatial region in particular being concealed in relation to the surroundings by the housing panel,
the housing panel in particular being screw-connected to the frame.

9. Vehicle according to at least one of the preceding claims,
**characterised in that**
a capacitor is wired in series and/or in parallel with the secondary winding such that the resonant frequency of the resonant circuit thus formed is equal to the frequency of the alternating current impressed on the primary conductor.

10. Method for operating a vehicle according to at least one of the preceding claims,
**characterised in that**
once the insertion part has been inserted and the DC-to-DC converter (24) has been electrically connected to the DC link of the vehicle, the DC-to-DC converter (24) is automatically detected and is operated as a bus subscriber of a data bus of the vehicle, in particular for controlling the energy flow in accordance with specifications from an energy management system.

## Revendications

1. Véhicule, notamment véhicule logistique
muni d'un châssis et d'une partie (1) formant boîtier qui est fixée à ce dernier,
une partie insérable pouvant être introduite sur ladite partie (1) formant boîtier, dans une région spatiale dudit véhicule,
un premier ou un second module (21, 31) de stockage d'énergie, et un convertisseur CC/CC (24) raccordé électriquement audit module (21, 31) de stockage d'énergie, étant implantés sur ladite partie insérable,
sachant notamment que le premier module (21) de stockage d'énergie diffère du second module (31) de stockage d'énergie, en particulier quant à son mode d'action,
et/ou sachant que
ledit premier module (21) de stockage d'énergie est une batterie ou un accumulateur, et que ledit second module (31) de stockage d'énergie est un condensateur à double couche et/ou un condensateur à haute capacité,
ladite partie (1) formant boîtier étant réalisée avec configuration en cuvette, en vue du guidage et/ou du centrage de ladite partie insérable,
laquelle configuration en cuvette remplit la fonction d'un guide de la partie insérable lors de l'introduction de ladite partie insérable,
la partie (1) formant boîtier étant pourvue de fentes ininterrompues, notamment de fentes régulièrement espacées les unes des autres dans la direction d'introduction,
**caractérisé par le fait que**
le convertisseur CC/CC (24) comporte des ailettes de refroidissement sur sa face tournée vers la platine d'embase (27),
la partie insérable étant munie d'une platine d'embase (27) qui peut être introduite par glissement sur la partie (1) formant boîtier, de configuration en cuvette, et comporte un évidement (32),
la projection verticale dudit évidement (32), dans la surface de déplacement du véhicule, étant en chevauchement avec la projection verticale des fentes dans ladite surface de déplacement, de sorte que de l'air de refroidissement circulant à travers lesdites fentes est dirigé, en passant par ledit évidement (32), vers les ailettes de refroidissement du convertisseur CC/CC (24),
sachant qu'une partie de connexion enfichable implantée sur ladite platine d'embase (27) est mise en contact par enfichage, lors de l'introduction de la partie insérable, avec une partie complémentaire de connexion enfichable correspondante, raccordée au châssis du véhicule, de telle sorte que le convertisseur CC/CC (24) soit connecté électriquement à un circuit intermédiaire à partir duquel peut être alimenté un onduleur qui approvisionne un moteur électrique, notamment en vue de l'entraînement d'une roue dudit véhicule.

2. Véhicule selon la revendication 1,
**caractérisé par le fait que**
la région encaissée de la cuvette s'étend dans la direction d'introduction.

3. Véhicule selon au moins l'une des revendications précédentes,
**caractérisé par le fait que**
la partie de connexion enfichable est une partie hybride de connexion enfichable,
sachant que des premiers contacts sont connectés à un raccord de tension continue du convertisseur CC/CC (24), et que des seconds contacts acheminent des signaux d'un bus de données prévu entre une commande dudit véhicule et ledit convertisseur CC/CC (24).

4. Véhicule selon au moins l'une des revendications précédentes,
**caractérisé par le fait**
**qu'**un enroulement secondaire, auquel peut être notamment transmise de l'énergie émanant d'un conducteur primaire installé dans la surface de déplacement, est disposé à la face inférieure dudit véhicule,
sachant que de l'énergie peut être délivrée au circuit intermédiaire à partir dudit enroulement secondaire, en particulier par l'entremise d'un convertisseur CA/CC (6) ;
et/ou par le fait
**qu'**un élément de stockage d'énergie, notamment un accumulateur ou une batterie à partir duquel (de laquelle) peut être au moins alimentée la commande du véhicule, est implanté sur le châssis dudit véhicule.

5. Véhicule selon au moins l'une des revendications précédentes,
**caractérisé par le fait que**
deux parois latérales de la partie insérable sont fixées à la platine d'embase (27),
parois sur lesquelles le second module (31) de stockage d'énergie est rapporté par vissage, au moyen d'une vis traversant le carter dudit second module (31) de stockage d'énergie, notamment de façon à réserver un espacement entre ledit second module (31) de stockage d'énergie et ladite platine d'embase (27),
ou parois entre lesquelles est fixé un rail de maintien (23) auquel le premier module (21) de stockage d'énergie est maintenu en suspension, en particulier de manière à réserver un espacement entre ledit premier module (21) de stockage d'énergie et ladite platine d'embase (27).

6. Véhicule selon au moins l'une des revendications précédentes,
**caractérisé par le fait**
**qu'**une poignée (28) est ménagée sur la platine d'embase (27) ;
et/ou par le fait
**que** des trous traversants sont pratiqués dans la partie (1) formant boîtier en vue de la consignation à demeure de la partie insérable, au moyen de vis.

7. Véhicule selon au moins l'une des revendications précédentes,
**caractérisé par le fait que**
la paroi latérale, retenant le premier ou le second module (21, 31) de stockage d'énergie, est reliée à la platine d'embase (27).

8. Véhicule selon au moins l'une des revendications précédentes,
**caractérisé par le fait que**
la région spatiale est au moins également délimitée par le châssis, par la platine d'embase (27), par une partie de boîtier en tôle reliée audit châssis du véhicule, et par une platine de recouvrement,
sachant notamment que ladite région spatiale est recouverte par ladite partie de boîtier en tôle, en direction de l'espace environnant,
ladite partie de boîtier en tôle étant notamment reliée audit châssis par vissage.

9. Véhicule selon au moins l'une des revendications précédentes,
**caractérisé par le fait**
**qu'**un condensateur est branché en série et/ou en parallèle avec l'enroulement secondaire, de façon telle que la fréquence de résonance du circuit oscillant, ainsi formé, soit égale à la fréquence du courant alternatif induit dans le conducteur primaire.

10. Procédé d'actionnement d'un véhicule conforme à au moins l'une des revendications précédentes,
**caractérisé par le fait**
**qu'**à l'issue de l'introduction de la partie insérable, et du raccordement électrique du convertisseur CC/CC (24) au circuit intermédiaire du véhicule, ledit convertisseur CC/CC (24) est identifié automatiquement et est exploité en tant qu'abonné à un bus de données dudit véhicule, notamment en vue de commander le flux d'énergie en conformité avec une spécification édictée par un système gestionnaire d'énergie.
